# EUROPEAN PATENT APPLICATION

(11) **EP 4 746 485 A1**
(43) Date of publication of application: **20.05.2026**
(21) Application number: 24848213.5
(22) Date of filing: 29.07.2024
(51) Int. Cl.: H04W 16/28, H04W 72/542, H04L 41/16

(54) **ELECTRONIC DEVICE AND METHOD FOR BEAM MANAGEMENT IN WIRELESS COMMUNICATION**

(30) Priority: 02.08.2023 CN 202310967852
(71) Applicant: Sony Group Corporation, Tokyo 108-0075 (JP)
(72) Inventor: SUN, Chen, Beijing 100027 (CN); BAI, Yingshuang, Beijing 100027 (CN)
(74) Representative: D Young & Co LLP
(86) International application number: PCT/CN2024/108066
(87) International publication number: WO 2025/026258

(57) **Abstract**

The present disclosure provides an electronic device and method for beam management in wireless communication, an electronic device and method for a user equipment side for wireless communication, and a computer readable storage medium. The electronic device for beam management in wireless communication comprises: a processing circuit, configured to: acquire a measurement result of a user equipment for a downlink beam pair to be measured, said downlink beam pair comprising a downlink transmission beam and a downlink reception beam; and on the basis of the measurement result, use an artificial intelligence model to perform beam pair prediction to obtain a predicted output, the predicted output comprising an optimal downlink transmission beam, a plurality of optimal downlink reception beams corresponding to the optimal downlink transmission beam, and camp-on time of each optimal downlink reception beam.

## Description

This application claims priority to Chinese Patent Application No. 202310967852.7 titled "ELECTRONIC DEVICE AND METHOD FOR BEAM MANAGEMENT IN WIRELESS COMMUNICATION", filed on August 02, 2023 with the China National Intellectual Property Administration, which is incorporated herein by reference in its entirety.

### FIELD

The present disclosure relates to the field of wireless communications, and particularly to a technique for artificial intelligence (AI)-based beam management in wireless communications. More specifically, the present disclosure relates to an electronic device and method for beam management in wireless communications, an electronic device and method for user equipment side of wireless communications, and a computer-readable storage medium.

### BACKGROUND

Use of artificial intelligence for beam management, which involves predicting an optimum downlink beam through an AI model, has been currently discussed in 3GPP RAN1. In existing beam management, a user equipment scans and measures a reference signal such as a channel state information reference signal (CSI-RS) or synchronization signal block (SSB), and then reports a measurement result for multiple candidate downlink transmitting beams, so that the network side selects an optimum beam based on the measurement result. Introducing AI mechanisms in beam management can reduce measurement overhead and time latency.

### SUMMARY

Hereinafter provided is a brief summary of the present disclosure, which is intended to provide a basic understanding of aspects of the present disclosure. It should be understood that this summary is not an exhaustive overview of the present disclosure. The summary is not intended to identify key or critical portions of the present disclosure or to delineate the scope of the present disclosure. The summary merely aims to present some concepts in a simplified form, as a prelude to the more detailed description that is presented later.

According to an aspect of the present disclosure, an electronic device for beam management in wireless communications is provided. The electronic device includes processing circuitry, configured to: acquire a measurement result of user equipment with respect to a downlink beam pair to be measured, the downlink beam pair to be measured including a downlink transmitting beam and a downlink receiving beam; and perform, based on the measurement result, beam pair prediction with an artificial intelligence (AI) model to acquire a prediction output, where the prediction output includes an optimum downlink transmitting beam, multiple optimum downlink receiving beams corresponding to the optimum downlink transmitting beam and residence time for each optimum downlink receiving beam.

According to another aspect of the present disclosure, a method for beam management in wireless communications is provided. The method includes: acquiring a measurement result of user equipment with respect to a downlink beam pair to be measured, the downlink beam pair to be measured including a downlink transmitting beam and a downlink receiving beam; and performing, based on the measurement result, beam pair prediction with an artificial intelligence (AI) model to acquire a prediction output, where the prediction output includes an optimum downlink transmitting beam, multiple optimum downlink receiving beams corresponding to the optimum downlink transmitting beam and residence time for each optimum downlink receiving beam.

According to an aspect of the present disclosure, an electronic device for beam management in wireless communications is provided. The electronic device includes processing circuitry, configured to: transmit, to a network side, a measurement result with respect to a downlink beam pair to be measured, the downlink beam pair to be measured including a downlink transmitting beam and a downlink receiving beam, where the network side performs, based on the measurement result, beam pair prediction with an artificial intelligence (AI) model to acquire a prediction output, where the prediction output includes an optimum downlink transmitting beam, multiple optimum downlink receiving beams corresponding to the optimum downlink transmitting beam and residence time for each optimum downlink receiving beam; and receive the prediction output from the network side.

According to another aspect of the present disclosure, a method for user equipment side of wireless communications is provided. The method includes: transmitting, to a network side, a measurement result with respect to a downlink beam pair to be measured, the downlink beam pair to be measured including a downlink transmitting beam and a downlink receiving beam, where the network side performs, based on the measurement result, beam pair prediction with an artificial intelligence (AI) model to acquire a prediction output, where the prediction output includes an optimum downlink transmitting beam, multiple optimum downlink receiving beams corresponding to the optimum downlink transmitting beam and residence time for each optimum downlink receiving beam; and receiving the prediction output from the network side.

According to other aspects of the present disclosure, computer program codes and a computer program product for implementing the above-described method and a computer-readable storage medium having the computer program codes for implementing the method stored thereon are further provided.

With the electronic device and method according to the embodiments of the present disclosure, the optimum downlink transmitting beam and multiple optimum downlink receiving beams corresponding to the optimum downlink transmitting beam are acquired through beam pair prediction based on the AI model, so that measurement overhead and reporting overhead for beam management may be effectively reduced.

These and other advantages of the present disclosure become more apparent through preferred embodiments of the present disclosure described in detail below in conjunction with accompany drawings.

### BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical embodiments of the present disclosure and should not be construed as a limitation to the scope of the present disclosure. In the drawings:
FIG. 1 is a block diagram illustrating functional modules of an electronic device for beam management in wireless communications according to an embodiment of the present disclosure;
FIG. 2 illustrates a schematic example of a downlink transmitting beam and a downlink receiving beam;
FIG. 3 illustrates a schematic example of an optimum downlink transmitting beam and an optimum downlink receiving beam;
FIG. 4 is a block diagram illustrating functional modules of an electronic device for beam management in wireless communications according to an embodiment of the present disclosure;
FIG. 5 is a block diagram illustrating functional modules of an electronic device for user equipment side of wireless communications according to another embodiment of the present disclosure;
FIG. 6 is a block diagram illustrating functional modules of an electronic device for user equipment side of wireless communications according to another embodiment of the present disclosure;
FIG. 7 illustrates a flowchart of a method for beam management in wireless communications according to an embodiment of the present disclosure;
FIG. 8 illustrates a flowchart of a method for user equipment side of wireless communications according to an embodiment of the present disclosure;
FIG. 9 is a block diagram illustrating a first example of a schematic configuration of an eNB or gNB to which the technology of the present disclosure is applicable;
FIG. 10 is a block diagram illustrating a second example of a schematic configuration of an eNB or gNB to which the technology of the present disclosure is applicable;
FIG. 11 is a block diagram illustrating an example of a schematic configuration of a smart phone to which the technology of the present disclosure is applicable;
FIG. 12 is a block diagram illustrating an example of a schematic configuration of an automobile navigation device to which the technology of the present disclosure is applicable; and
FIG. 13 is a block diagram of an exemplary structure of a general-purpose personal computer in which a method and/or apparatus and/or system according to an embodiment of the present disclosure may be implemented.

### DETAILED DESCRIPTION

Exemplary embodiments of the present disclosure are described below in conjunction with the drawings. For the sake of clarity and conciseness, not all features of an actual embodiment are described in the specification. However, it is to be appreciated that numerous implementation-specific decisions shall be made while implementing any of such actual embodiments so as to achieve specific objectives of a developer, for example, to comply with system- and business-related constraining conditions which vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

### <First Embodiment>

As described above, introducing AI in beam management can reduce measurement overhead and time latency. In a traditional beam management mechanism, the network side only indicates an optimum downlink transmitting beam, and the downlink receiving beam used by the user equipment (UE) side for reception is considered to be an implementation issue for the UE itself. However, in AI-based beam management, an output of the AI model may be an optimum downlink beam pair, that is, including both an optimum downlink transmitting beam and an optimum downlink receiving beam. In this case, it may be necessary to align the understanding of the downlink receiving beam between the network side and the UE. Therefore, a new measurement and reporting mechanism is required for the Al-based beam management.

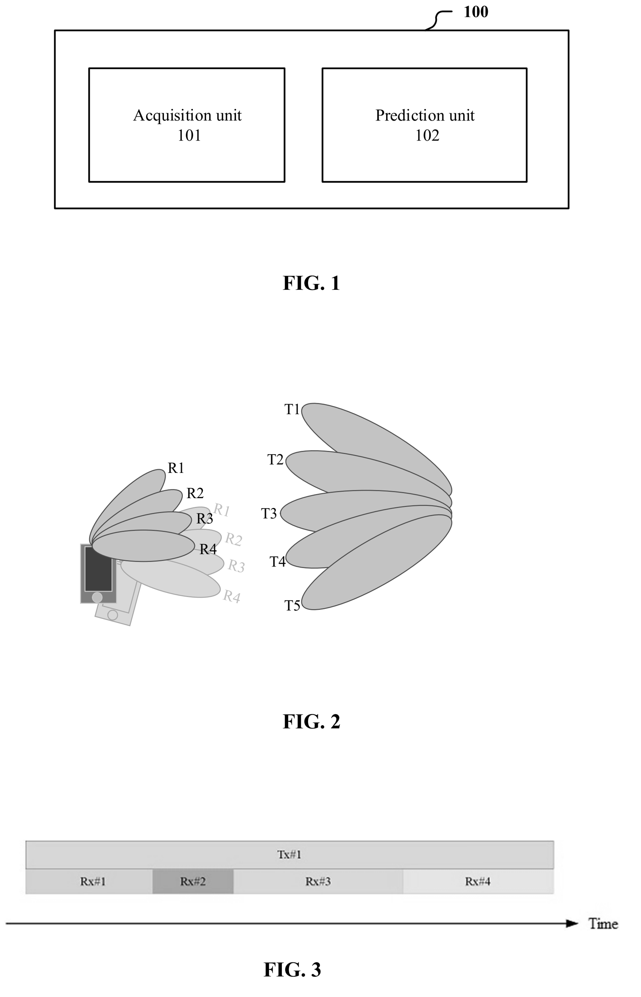

FIG. 1 is a block diagram illustrating functional modules of an electronic device 100 for beam management in wireless communications according to an embodiment of the present disclosure. As shown in FIG. 1, the electronic device 100 includes an acquisition unit 101 and a prediction unit 102. The acquisition unit 101 is configured to acquire a measurement result of user equipment with respect to a downlink beam pair to be measured, the downlink beam pair to be measured including a downlink transmitting beam and a downlink receiving beam. The prediction unit 102 is configured to perform, based on the measurement result, beam pair prediction with an artificial intelligence (AI) model to acquire a prediction output, where the prediction output includes an optimum downlink transmitting beam, multiple optimum downlink receiving beams corresponding to the optimum downlink transmitting beam and residence time for each optimum downlink receiving beam.

The acquisition unit 101 and the prediction unit 102 may be implemented by one or more processing circuitry. The processing circuitry may be implemented as a chip or a processor, for example. It should be understood that various functional units in the electronic device shown in FIG. 1 are only logical modules defined based on specific functions thereof, and are not intended to limit a specific implementation.

The electronic device 100 may be disposed on the network side, for example, at a base station or a wireless transceiver node. It should be noted that the electronic device 100 may be implemented at a chip level or at a device level. For example, the electronic device 100 may operate as a base station itself and may further include a memory, a transceiver (not shown), and other external devices. The memory may store related data information and programs to be executed by the base station to achieve various functions. The transceiver may include one or more communication interfaces to support communications with different devices (such as a UE, another base station, and the like). An implementation of the transceiver is not specifically limited here.

The user equipment (UE) measures the downlink beam pair to be measured, for example, to obtain a reference signal received power (RSRP) or signal to interference and noise ratio (SINR) of a received signal. The acquisition unit 101 is configured to receive the measurement result from the UE and execute the AI model on the network side.

The prediction unit 102 uses the measurement result as an input of the AI model, and performs beam pair prediction by executing the AI model to obtain a prediction output. The prediction output is, for example, an optimum downlink beam pair to be used for communications. In actual communications, due to a rapid change frequency of a moving direction of a UE and other reasons, a change frequency of the optimum downlink receiving beam is often higher than a change frequency of the optimum downlink transmitting beam. That is, within a coverage of a certain optimum downlink transmitting beam, an optimum downlink receiving beam corresponding thereto changes multiple times. Therefore, the optimum downlink receiving beam may be frequently switched during the residence time for the certain optimum downlink transmitting beam. That is, the optimum downlink beam pair changes frequently. In a case where a predicted optimum downlink beam pair fails, the input required by the AI model is remeasured, causing increase of the overhead for the measurement and reporting.

For ease of understanding, FIG. 2 illustrates a schematic example. In the example of FIG. 2, there are five downlink transmitting beams and four downlink receiving beams. During beam measurement for beam management, the UE needs to measure a total of 20 beam pairs and obtain 20 RSRP values correspondingly, for example. Reporting of RSRP and ID of a candidate beam pair may be performed according to Table 1 below.

**Table 1**

| RSRP/difference value | Downlink transmitting beam | Downlink receiving beam |
|---|---|---|
| RSRP1 (maximum value) | T3 | R2 |
| RSRP2 (difference value) | T3 | R3 |
| RSRP3 (difference value) | T4 | R4 |
| RSRP5 (difference value) | T2 | R1 |

The downlink transmitting beams corresponding to RSRP1 and RSRP2 are both T3, whose ID is reported repeatedly. It is assumed that the AI model predicts that the optimum beam pair is {T3, R2}, and the UE uses this beam pair for communication. As the UE moves, the optimum beam pair {T3, R2} becomes invalid, and the UE performs measurement and reporting again. For example, possible changes are as shown in Table 2 below.

**Table 2**

| RSRP/difference value | Downlink transmitting beam | Downlink receiving beam |
|---|---|---|
| RSRP1 (maximum value) | T3 | R3 |

At this time, the optimum downlink transmitting beam is still T3, while the optimum downlink receiving beam changes to R3. That is, the optimum downlink receiving beam is switched during the residence time for the optimum downlink transmitting beam T3.

It can be understood that switching of the optimum downlink receiving beam causes an increase in measurement and reporting overhead of the UE. In addition, in AI-based beam management, if a field about the downlink receiving beam is added to the existing reporting mechanism, with expansion of the UE antenna capability, more downlink receiving beams are supported, so that the overhead caused by reporting increases significantly, and frequent switching of the optimum downlink receiving beam further aggravates the increase of overhead.

In this embodiment, a solution is proposed to reduce the measurement and reporting overhead of the UE by improving the prediction output of the AI model. Specifically, the prediction output includes an optimum downlink transmitting beam, multiple optimum downlink receiving beams corresponding to the optimum downlink transmitting beam and residence time for each optimum downlink receiving beam.

In other words, the predicted optimum downlink transmitting beam and the optimum downlink receiving beam are not necessarily in one-to-one correspondence. One optimum downlink transmitting beam may correspond to multiple optimum downlink receiving beams in chronological order within the residence time for the optimum downlink transmitting beam. That is, the optimum downlink transmitting beam and the multiple optimum downlink receiving beams form an optimum beam pair successively according to the residence time. In this way, at least during the residence time for the optimum downlink transmitting beam, repeated measurement and prediction in response to switching of the optimum downlink receiving beam may be avoided, and thereby overhead is reduced. Moreover, since the number of downlink transmitting beams is much larger than the number of downlink receiving beams, the reporting overhead is effectively reduced with this method.

FIG. 3 illustrates a schematic example. Tx#1 represents a current optimum downlink transmitting beam. During residence time for Tx#1, corresponding optimum downlink receiving beams are Rx#1, Rx#2, Rx#3, and Rx#4. A prediction output of the AI model may include, for example, a form of [Tx#1; Rx#1, Rx#2, Rx#3, Rx#4], where the field of each optimum downlink receiving beam may further include information about residence time for the optimum downlink receiving beam. In this way, repeated measurement, reporting, and prediction after the beam pair of Tx#1 and Rx#1 fails is avoided, so that overhead is reduced.

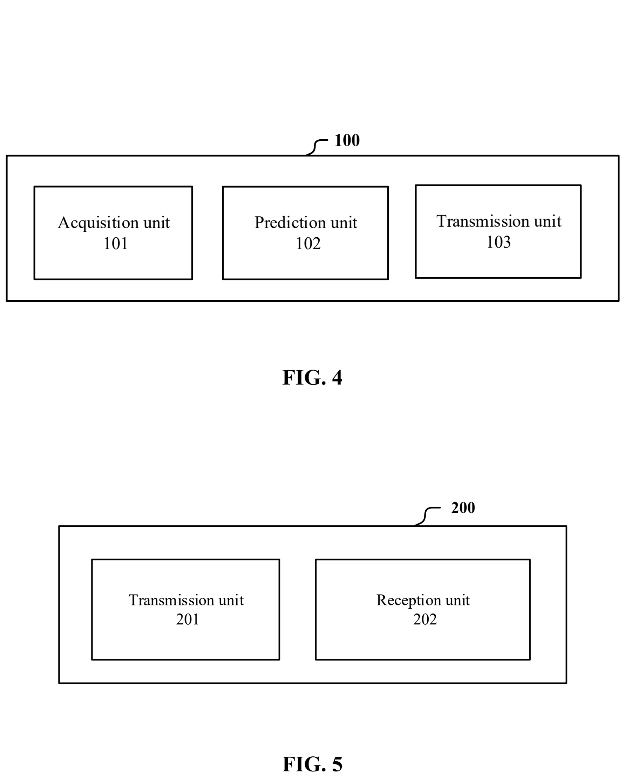

As shown in FIG. 4, the electronic device 100 may further include a transmission unit 103 configured to transmit the prediction output of the AI model to the UE. The UE uses multiple optimum downlink beams successively according to residence time in the prediction output to receive the optimum downlink transmitting beam.

Residence time for a beam may be represented by a time period or a timestamp when the beam is transmitted. In addition, the prediction output may further include residence time for the optimum downlink transmitting beam. It should be noted that this is not restrictive.

In addition, each downlink beam pair to be measured may be indicated in a similar manner. That is, each downlink beam pair to be measured may include a downlink transmitting beam and multiple downlink receiving beams corresponding to the downlink transmitting beam.

Accordingly, a reporting format of a measurement result as input to the AI model may be designed similarly. That is, one downlink transmitting beam corresponds to multiple downlink receiving beams, the downlink transmitting beam is not reported repeatedly, and the downlink receiving beams may be reported repeatedly. For example, the following form may be applied.

Set A {[Tx#1; Rx#1, Rx#2, ..., Rx#n], [Tx#2; Rx#1, Rx#2, ..., Rx#n], ..., [Tx#m; Rx#1, Rx#2, ..., Rx#n]};

Set B {[Tx#1; Rx#1, Rx#2, ..., Rx#n], [Tx#2; Rx#1, Rx#2, ..., Rx#n], ..., [Tx#m; Rx#1, Rx#2, ..., Rx#n]}.

There has Tx#1 ≠ Tx#2 ≠...≠ Tx#m.

Here, Set A contains all possible beam sets and is considered a complete set; and Set B contains beam sets that are used as input for measuring the AI model during inference. In a training phase of the AI model, data required for the AI model comes from measurements on Set A and/or Set B. In a case where Set B is a subset of Set A, Set A needs to be measured. In a case where Set A is different from Set B, Set A + Set B needs to be measured. In an inference phase of the AI model, only beams in Set B need to be measured.

Apparently, this is not restrictive, and indication of the beam to be measured in an existing beam management and an existing input form of an AI model are applicable.

In addition, the acquisition unit 101 is further configured to acquire one or more of the following information: information related to indication of the downlink beam pair corresponding to the measurement result, and information related to the movement of the UE. For example, the acquisition unit 101 receives such information from the UE.

The information related to the movement of the UE may include, for example, one or more of the following: a trajectory of the UE, a speed of the UE, an activity range of the UE, a location of the UE and a movement direction of the UE. The AI model may predict multiple optimum downlink receiving beams within the residence time for the optimum downlink transmitting beam according to the information related to the movement of the UE. In addition, the AI model may predict multiple optimum downlink receiving beams within the residence time for the optimum downlink transmitting beam according to historical switching information of the downlink receiving beam.

In addition, in order to further reduce the reporting overhead or improve the data quality used for the AI model, the acquired measurement result may be obtained through screening, by the UE, the data obtained with measuring. For example, the UE may screen the data obtained with measuring according to quality of the data. The quality of data may be represented by a measured physical layer RSRP and/or SINR of a signal.

As an example, the authentication information of the AI model may include information related to screening. The information related to screening may include, for example, reference information for classifying the data obtained with measuring according to quality of the data. The reference information may include, for example, one or more physical layer RSRP and/or SINR thresholds.

The UE may classify the data into data of different quality levels according to the reference information. Here, the UE applies finer quantization accuracy and smaller step size for data in a higher quality level than for data in a lower quality level. Furthermore, the UE may discard data in the lowest one or more quality levels.

For example, it may be considered that a beam pair is closer to the optimum beam pair as the RSRP value measured for the beam pair is larger, and such data may be considered as data in a high quality level. On the contrary, it may be considered that a beam pair is further away from the optimum beam pair as the RSRP value measured for the beam pair is smaller. and such data may be considered as data in a low quality level. It may be understood that the quantization accuracy of the data and the step size for calculating the difference would affect performance of the AI model, and also determine the data overhead during reporting.

According to this example, finer quantization accuracy and smaller step size are applied for data in a high-quality level, so as to control the data overhead during reporting while ensuring that the data quality required by the AI model is met.

For example, to facilitate understanding, an illustrative but non-limiting example is given below. It is assumed that the reference information includes two RSRP thresholds th1 and th2, and th1 is greater than th2. In a case where the measured RSRP is greater than th1, the data is quantized with a first quantization accuracy, and a first step size is applied when calculating the difference. In a case where the measured RSRP is between th1 and th2, the data is quantized with a second quantization accuracy, and a second step size is applied when calculating the difference. Here, the first quantization accuracy is higher than the second quantization accuracy, and the first step size is smaller than the second step size. In a case where the measured RSRP is less than th1, the data is discarded.

In the training phase of the AI model, measured data may be all used for training to ensure data traversal and diversity. In the inference phase of the AI model, the above-mentioned screening may be performed to reduce reporting overhead. Apparently, this is not restrictive, and the data screening may be performed in the training phase.

In addition, when the UE performs screening on data , there may be a situation where different downlink transmitting beams correspond to different numbers of downlink receiving beams. That is, for the reported [Tx#m; Rx#1, Rx#2, ..., Rx#n], n varies as m varies.

The authentication information of the AI model is mentioned above. The acquisition unit 101 and the transmission unit 103 may be configured to share the authentication information of the AI model with the UE. The authentication information includes information related to screening, by the UE, the data obtained with measuring to obtain the measurement result.

The authentication information of the AI model is passed, for example, during an authentication phase of the AI model. Authentication of the AI models is to align the understanding of the AI model between the network side and the UE. For example, the authentication includes function-based authentication and model-based authentication. The function-based authentication is a description of a functions of the AI model, and the model-based authentication is a description of the model, such as emphasizing an ID or quantity of the model.

In addition, to perform model monitoring, it is necessary to align understanding of the prediction output between the network side and the UE. In this embodiment, the AI model is deployed on the network side. Since the transmission unit 103 transmits the prediction output to the UE, the understanding of the prediction output between the network side and the UE are able to be aligned, and the model monitoring can be performed on either the network side or the UE side.

In summary, with the electronic device 100 according to the embodiment of the present disclosure, the optimum downlink transmitting beam and multiple optimum downlink receiving beams corresponding to the optimum downlink transmitting beam are acquired through beam pair prediction based on the AI model, so that measurement overhead and reporting overhead for beam management are effectively reduced.

### <Second Embodiment>

In this embodiment, the electronic device 100 is located on the UE side, and the AI model is executed by the UE. The UE may be various wireless communication terminals, or may be a mobile base station or other communication terminals. The electronic device 100 may be implemented at a chip level or at a device level. For example, the electronic device 100 may operate as the UE itself and may further include a memory, a transceiver (not shown), and other external devices. The memory may store related data information and programs that the UE needs to execute to achieve various functions. The transceiver may include one or more communication interfaces to support communications with different devices (such as another UE, a base station, and a core network). An implementation of the transceiver is not specifically limited here.

In this case, the acquisition unit 101 locally acquires a measurement result and related information. The related information here includes, for example, one of more of the following information: information related to indication of the downlink beam pair corresponding to the measurement result, and information related to the movement of the UE. Detailed description is given in the first embodiment and is not repeated here.

In addition, relevant contents regarding the prediction output and data screening described in the first embodiment are also applicable to this embodiment and subsequent embodiments, and are appropriately simplified or omitted in the following description.

The optimum downlink transmitting beam and the multiple optimum downlink receiving beams in the prediction output form an optimum beam pair successively according to the residence time, and the UE uses the multiple optimum downlink receiving beams successively according to the residence time to receive the optimum downlink transmitting beam. Alternatively, the prediction output may further include residence time for the optimum downlink transmitting beam. Residence time for a beam may be represented, for example, by a time period or a timestamp when the beam is transmitted.

During an inference phase of the AI model, the transmission unit 103 transmits information of the optimum downlink transmitting beam to the network side. Because the network side does not need to be aware of which downlink receiving beam is used by the UE for reception, the transmission unit 103 does not need to transmit the complete information of the prediction output to the network side, so that signaling overhead is reduced. Information of the optimum downlink transmitting beam includes, for example, an ID of a beam, and optionally residence time for a beam.

On the other hand, in the monitoring phase of the AI model, in a case where detection is performed on the network side, the transmission unit 103 is configured to transmit the prediction output to the network side. This is because the understanding of the prediction output between the network side and the UE need to be aligned in this case.

In addition, the downlink beam pair to be measured and the input of the AI model may be configured or designed in a form similar to the form of the prediction output of the AI model. Apparently, this is not restrictive, and existing indication of the beam to be measured and an existing input form of the AI model are applicable.

As mentioned in the first embodiment, each downlink beam pair to be measured may include a downlink transmitting beam and multiple downlink receiving beams corresponding to the downlink transmitting beam. The acquisition unit 101 may, for example, receive indication of the downlink beam pair from the network side. The input of the AI model may be designed similarly. That is, one downlink transmitting beam corresponds to multiple downlink receiving beams.

In addition, the measurement result for the AI model may be obtained through screening, by the UE, the data obtained with measuring. For example, the UE (which is specifically the prediction unit 102 of the electronic device 100, for example) may screening the data obtained with measuring according to quality of the data. The quality of data may be represented by a measured physical layer RSRP and/or SINR of a signal.

As an example, the authentication information of the AI model may include information related to screening. The information related to screening may include, for example, reference information for classifying the data obtained with measuring according to quality of the data. The reference information may include, for example, one or more physical layer RSRP and/or SINR thresholds.

The UE may classify the data into data of different quality levels according to the reference information. Here, the UE applies finer quantization accuracy and smaller step size for data in a higher quality level than for data in a lower quality level. Furthermore, the UE may discard data in the lowest one or more quality levels.

The acquisition unit 101 and the transmission unit 103 may be configured to share the authentication information of the AI model with the network side. The authentication information includes information related to screening, by the UE, the data obtained with measuring to obtain the measurement result. For description of authentication of the AI model, reference may be made to the first embodiment.

In summary, with the electronic device 100 according to the embodiment of the present disclosure, the optimum downlink transmitting beam and multiple optimum downlink receiving beams corresponding to the optimum downlink transmitting beam are acquired through beam pair prediction based on the AI model, so that measurement overhead and reporting overhead for beam management are effectively reduced.

### <Third Embodiment>

FIG. 5 is a block diagram illustrating functional modules of an electronic device 200 for user equipment side of wireless communications according to another embodiment of the present disclosure. As shown in FIG. 5, the electronic device 200 includes a transmission unit 201 and a reception unit 202. The transmission unit 201 is configured to transmit, to a network side, a measurement result with respect to a downlink beam pair to be measured, the downlink beam pair to be measured including a downlink transmitting beam and a downlink receiving beam, where the network side performs, based on the measurement result, beam pair prediction with an AI model to acquire a prediction output, where the prediction output includes an optimum downlink transmitting beam, multiple optimum downlink receiving beams corresponding to the optimum downlink transmitting beam and residence time for each optimum downlink receiving beam. The reception unit 202 is configured to receive the prediction output from the network side.

The transmission unit 201 and the reception unit 202 may be implemented by one or more processing circuitry. The processing circuitry may be implemented as a chip or a processor, for example. It should be understood that various functional units in the electronic device shown in FIG. 5 are only logical modules defined based on specific functions thereof, and are not intended to limit a specific implementation.

The electronic device 200 is located at the UE side. The UE may be various wireless communication terminals, or may be a mobile base station or other communication terminals. The electronic device 100 may be implemented at a chip level or at a device level. For example, the electronic device 100 may operate as the UE itself and may further include a memory, a transceiver (not shown), and other external devices. The memory may store related data information and programs that the UE needs to execute to achieve various functions. The transceiver may include one or more communication interfaces to support communications with different devices (such as another UE, a base station, and a core network). An implementation of the transceiver is not specifically limited here.

In the embodiment, the AI model is executed by the network side. The UE acquires the prediction output from the network side via the reception unit 202. The optimum downlink transmitting beam and the multiple optimum downlink receiving beams form an optimum beam pair successively according to the residence time, and the reception unit 202 is configured to use the multiple optimum downlink receiving beams successively according to the residence time to receive the optimum downlink transmitting beam. Alternatively, the prediction output may further include residence time for the optimum downlink transmitting beam.

In addition, the UE measures the downlink beam pair to be measured to provide input for the AI model on the network side. Similar to the first embodiment, each downlink beam pair to be measured may include a downlink transmitting beam and multiple downlink receiving beams corresponding to the downlink transmitting beam. The UE may, for example, receive indication of the downlink beam pair from the network side. The input of the AI model may be designed similarly. That is, one downlink transmitting beam corresponds to multiple downlink receiving beams. Correspondingly, the UE may adopt a similar form when reporting the measurement result.

The acquisition unit 201 is further configured to transmit, to the network side, one of more of the following information: information related to indication of the downlink beam pair corresponding to the measurement result, and information related to the movement of the UE.

The information related to the movement of the UE may include, for example, one or more of the following: a trajectory of the UE, a speed of the UE, an activity range of the UE, a location of the UE and a movement direction of the UE. The AI model may predict multiple optimum downlink receiving beams within the residence time for the optimum downlink transmitting beam according to the information related to the movement of the UE. In addition, the AI model may predict multiple optimum downlink receiving beams within the residence time for the optimum downlink transmitting beam according to historical switching information of the downlink receiving beam to.

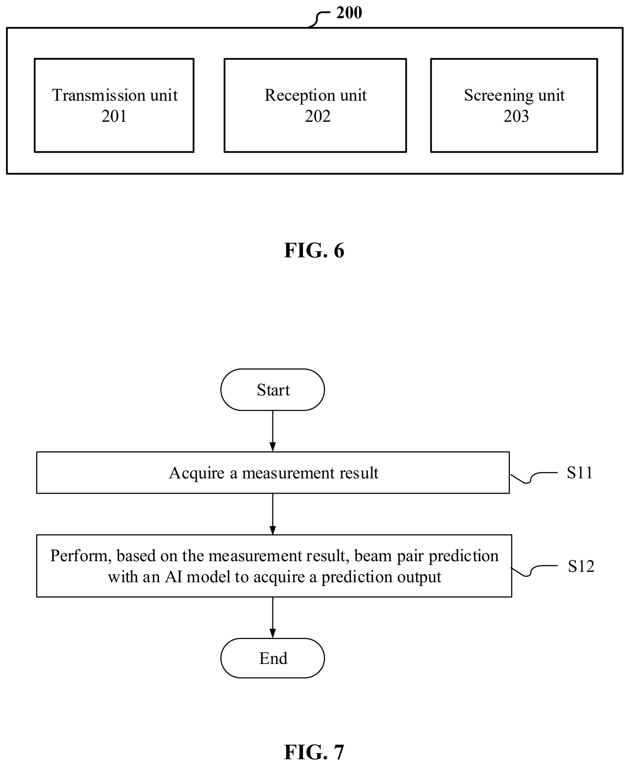

In addition, in order to further reduce the reporting overhead or improve the data quality used for the AI model, the acquired measurement result may be obtained through screening, by the UE, the data obtained with measuring. As shown in FIG. 6, the electronic device 200 may further include a screening unit 203 configured to obtain the measurement result by screening data obtained with measuring. The screening unit 203 is configured to perform the screening by classifying the data obtained with measuring according to quality of the data. The quality of data may be represented by a measured physical layer RSRP and/or SINR of a signal, for example.

Reference information for classification may be included in authentication information of the AI model, for example. The reference information may include one or more physical layer RSRP and/or SINR thresholds.

The screening unit 203 classifies the data into data of different quality levels according to the reference information. The screening unit 203 applies finer quantization accuracy and smaller step size for data in a higher quality level than for data in a lower quality level. Alternatively, the screening unit 203 may be configured to discard data in the lowest one or more quality levels. Detailed examples are provided in the first embodiment and are not repeated here.

The screening unit 203 may be configured to perform screening according to capability of the UE. For example, in a case where the UE is not able to perform data screening, the screening unit 203 performs no screening.

In summary, with the electronic device 200 according to the embodiment of the present disclosure, the optimum downlink transmitting beam and multiple optimum downlink receiving beams corresponding to the optimum downlink transmitting beam obtained through beam pair prediction based on the AI model are acquired, so that frequent switching of downlink receiving beams is avoided, and measurement overhead and reporting overhead for beam management are effectively reduced.

### <Fourth Embodiment>

In the description of the electronic device for beam management in wireless communications and the electronic device for user equipment side of wireless communications in the above embodiments, some processes or methods are further disclosed. Hereinafter, an overview of the methods is given without repeating some of details discussed above. It should be noted that although disclosed in the description of the electronic device for beam management in wireless communications and the electronic device for user equipment side of wireless communications, the methods are not necessarily implemented with the components as described or be performed by those components. For example, an embodiment of the electronic device for beam management in wireless communications and the electronic device for user equipment side of wireless communications may be implemented partially or entirely using hardware and/or firmware, while a method discussed below may be implemented entirely by a computer-executable program, although the method may employ the hardware and/or firmware for the electronic device for beam management in wireless communications and the electronic device for user equipment side of wireless communications.

FIG. 7 illustrates a flowchart of a method for beam management in wireless communications according to an embodiment of the present disclosure. The method includes: acquiring (S11) a measurement result of user equipment with respect to a downlink beam pair to be measured, the downlink beam pair to be measured including a downlink transmitting beam and a downlink receiving beam; and performing (S12) , based on the measurement result, beam pair prediction with an AI model to acquire a prediction output, where the prediction output includes an optimum downlink transmitting beam, multiple optimum downlink receiving beams corresponding to the optimum downlink transmitting beam and residence time for each optimum downlink receiving beam. The method may be performed on a network side, or may be performed on a UE side.

For example, each downlink beam pair to be measured may include a downlink transmitting beam and multiple downlink receiving beams corresponding to the downlink transmitting beam.

In step S11, one of more of the following information may be further acquired: information related to indication of the downlink beam pair corresponding to the measurement result, and information related to the movement of the UE. The information related to the movement of the UE includes, for example, one or more of the following: a trajectory of the UE, a speed of the UE, an activity range of the UE, a location of the UE and a movement direction of the UE.

The prediction output may further include residence time for the optimum downlink transmitting beam. Residence time for a beam may be represented by a time period or a timestamp when the beam is transmitted. The optimum downlink transmitting beam and the multiple optimum downlink receiving beams form an optimum beam pair successively according to the residence time, and the UE uses the multiple optimum downlink receiving beams successively according to the residence time to receive the optimum downlink transmitting beam.

In an example, the acquired measurement result is obtained through screening, by the UE, data obtained with measuring, where authentication information of the AI model includes information related to the screening. The information related to screening includes reference information for classifying the data obtained with measuring according to quality of the data. The quality of data may be represented by a measured physical layer RSRP and/or SINR of a signal. The reference information includes one or more physical layer RSRP and/or SINR thresholds.

For example, the UE classifies the data into data of different quality levels according to the reference information. The UE applies finer quantization accuracy and smaller step size for data in a higher quality level than for data in a lower quality level. Optionally, the UE may discard data in the lowest one or more quality levels.

In a case where the method is performed on the network side, the method further includes: receiving the measurement result and the information from the UE, and transmitting the prediction output to the UE.

The method further includes sharing the authentication information of the AI model with the UE. The authentication information includes information related to screening, by the UE, the data obtained with measuring to obtain the measurement result.

In a case where the method is performed on the UE side, the method further includes: transmitting the prediction output to a network side when the network side performs model monitoring on the AI model; and transmitting information of the optimum downlink transmitting beam to the network side during an inference phase of the AI model.

The method further includes sharing the authentication information of the AI model with the network side. The authentication information includes information related to screening, by the UE, the data obtained with measuring to obtain the measurement result.

The above method corresponds to the electronic device 100 in the first embodiment and the second embodiment. Reference may be made to description of the first embodiment and the second embodiment for specific details of the method, which are not repeated here.

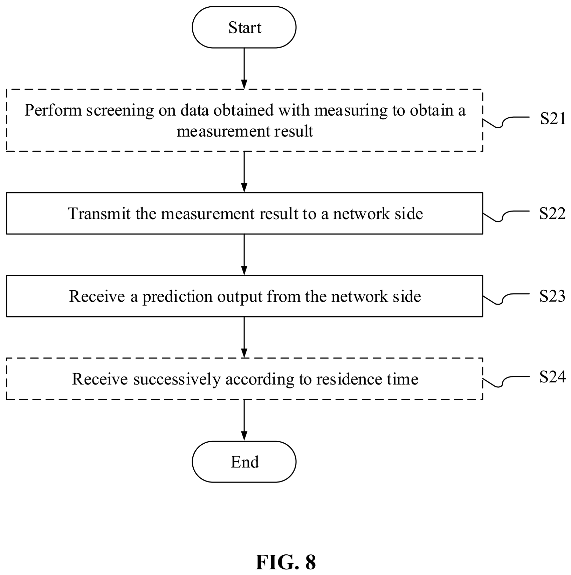

FIG. 8 illustrates a flowchart of a method for user equipment side of wireless communications according to an embodiment of the present disclosure. The method includes: transmitting (S22), to a network side, a measurement result with respect to a downlink beam pair to be measured, the downlink beam pair to be measured including a downlink transmitting beam and a downlink receiving beam, where the network side performs, based on the measurement result, beam pair prediction with an AI model to acquire a prediction output, where the prediction output includes an optimum downlink transmitting beam, multiple optimum downlink receiving beams corresponding to the optimum downlink transmitting beam and residence time for each optimum downlink receiving beam; and receiving (S23) the prediction output from the network side. The method may be performed on the UE side.

The optimum downlink transmitting beam and the multiple optimum downlink receiving beams form an optimum beam pair successively according to the residence time. As shown in a dotted box in FIG. 8, the method further includes step S24 of using the multiple optimum downlink receiving beams successively according to the residence time to receive the optimum downlink transmitting beam.

Additionally, in step S22, one of more of the following information may be further transmitted to the network side: information related to indication of the downlink beam pair corresponding to the measurement result, and information related to the movement of the UE.

For example, each downlink beam pair to be measured includes a downlink transmitting beam and multiple downlink receiving beams corresponding to the downlink transmitting beam.

As shown in another dotted box in FIG. 8, the method may further include step S21 of obtaining the measurement result by screening data obtained with measuring. For example, the screening may be performed by classifying the data obtained with measuring according to quality of the data.

For example, authentication information of the AI model includes reference information for the classifying. The quality of data may be represented by a measured physical layer RSRP and/or SINR of a signal. The reference information includes one or more physical layer RSRP and/or SINR thresholds.

Step S21 may include: classifying the data into data of different quality levels according to the reference information, and applying finer quantization accuracy and smaller step size for data in a higher quality level than for data in a lower quality level. Alternatively, data in the lowest one or more quality levels may be discarded. The screening may be performed according to capability of the UE.

The above method corresponds to the electronic device 200 in the third embodiment. Reference may be made to description of the third embodiment for specific details of the method, which are not repeated here.

It is to be noted that the above methods may be implemented in combination or alone.

The technology of the present disclosure is applicable to various products.

The electronic device 100 may be implemented as various base stations. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include: a body (which is also referred to as a base station device) configured to control wireless communications; and one or more remote radio heads (RRHs) arranged at a different place from the body. In addition, various types of user equipment may serve as a base station by temporarily or semi-permanently performing functions of the base station.

For example, the electronic device 100 and the electronic device 200 may be implemented as various types of user equipment. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

### [Application Examples of Base Station]

### (First Application Example)

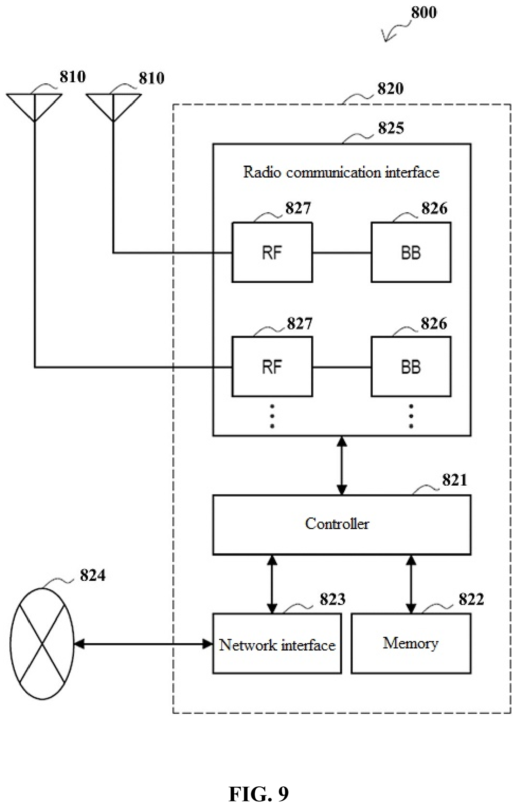

FIG. 9 is a block diagram illustrating a first example of a schematic configuration of an eNB or gNB to which the technology of the present disclosure is applicable. It should be noted that the following description is made taking an eNB as an example. The technology of the present disclosure is also applicable to a gNB. An eNB 800 includes one or more antennas 810 and a base station device 820. The base station device 820 and each of the antennas 810 may be connected to each other via a RF cable.

Each of the antennas 810 includes a single or multiple antenna elements (such as multiple antenna elements included in a multi-input multi-output (MIMO) antenna), and is used for the base station device 820 to transmit and receive radio signals. As shown in FIG. 9, the eNB 800 may include multiple antennas 810. For example, the multiple antennas 810 may be compatible with multiple frequency bands used by the eNB 800. Although FIG. 9 shows an example in which the eNB 800 includes multiple antennas 810, the eNB 800 may include a single antenna 810.

The base station device 820 includes a controller 821, a memory 822, a network interface 823, and a radio communication interface 825.

The controller 821 may be, for example, a CPU or a DSP, and operates various functions of a higher layer of the base station device 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have logical functions of performing control such as radio resource control, radio bearer control, mobility management, admission control, and scheduling. The control may be performed in conjunction with a nearby eNB or a core network node. The memory 822 includes an RAM and an ROM, and stores a program executed by the controller 821 and various types of control data (such as a terminal list, transmission power data, and scheduling data).

The network interface 823 is a communication interface for connecting the base station device 820 to a core network 824. The controller 821 may communicate with the core network node or another eNB via the network interface 823. In this case, the eNB 800 and the core network node or another eNB may be connected to each other through a logical interface (such as an S1 interface and an X2 interface). The network interface 823 may be a wired communication interface or a radio communication interface for a wireless backhaul line. In a case that the network interface 823 is a radio communication interface, the network interface 823 may use a higher frequency band for wireless communications than a frequency band used by the radio communication interface 825.

The radio communication interface 825 supports any cellular communication scheme (such as Long-Term Evolution (LTE) and LTE-Advanced), and provides wireless connection to a terminal in a cell of the eNB 800 via the antenna 810. The radio communication interface 825 may typically include, for example, a baseband (BB) processor 826 and an RF circuit 827. The BB processor 826 may perform, for example, coding/decoding, modulation/demodulation and multiplexing/de-multiplexing, and perform various types of signal processes of layers (for example, L1, media access control (MAC), radio link control (RLC) and packet data convergence protocol (PDCP)). Instead of the controller 821, the BB processor 826 may have a part or all of the above-mentioned logical functions. The BB processor 826 may be a memory storing a communication control program, or a module including a processor and related circuitry configured to execute the program. Updating the program may change the functions of the BB processor 826. The module may be a card or blade inserted into a slot of the base station device 820. Alternatively, the module may be a chip mounted on a card or blade. In addition, the RF circuit 827 may include, for example, a mixer, a filter and an amplifier, and transmit and receive a radio signal via the antenna 810.

As shown in FIG. 9, the radio communication interface 825 may include multiple BB processors 826. For example, the multiple BB processors 826 may be compatible with multiple frequency bands used by the eNB 800. As shown in FIG. 9, the radio communication interface 825 may include multiple RF circuits 827. For example, the multiple RF circuits 827 may be compatible with multiple antenna elements. Although FIG. 9 illustrates an example in which the radio communication interface 825 includes multiple BB processors 826 and multiple RF circuits 827, the radio communication interface 825 may include a single BB processor 826 or a single RF circuit 827.

In the eNB 800 as shown in FIG. 9, the acquisition unit 101, the transmission unit 103 and the transceiver of the electronic device 100 may be implemented through the radio communication interface 825. At least a part of the functions may be implemented by the controller 821. For example, the controller 821 may execute the functions of the acquisition unit 101, the prediction unit 102, and the transmission unit 103 to acquire a prediction output including an optimum downlink transmitting beam and multiple optimum downlink receiving beams corresponding to the optimum downlink transmitting beam and provide the prediction output to UE, so that the measurement overhead and reporting overhead for beam management are effectively reduced.

### (Second Application Example)

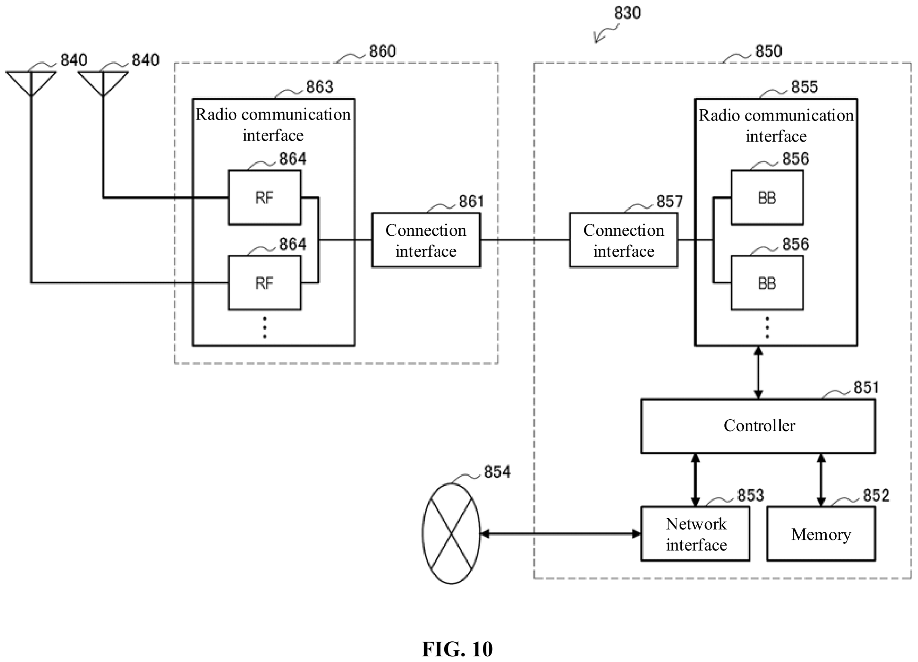

FIG. 10 is a block diagram illustrating a second example of a schematic configuration of an eNB or gNB to which the technology of the present disclosure is applicable. It should be noted that the following description is made taking the eNB as an example. The technology of the present disclosure is also applicable to the gNB. An eNB 830 includes a single or multiple antennas 840, a base station device 850 and an RRH 860. The RRH 860 and each of the antennas 840 may be connected to each other via an RF cable. The base station device 850 and the RRH 860 may be connected to each other via a high-speed line such as an optical fiber cable.

Each of the antennas 840 includes a single or multiple antenna elements (such as multiple antenna elements included in a MIMO antenna), and is used for the RRH 860 to transmit and receive a radio signal. As shown in FIG. 10, the eNB 830 may include multiple antennas 840. For example, the multiple antennas 840 may be compatible with multiple frequency bands used by the eNB 830. Although FIG. 10 illustrates an example in which the eNB 830 includes multiple antennas 840, the eNB 830 may include a single antenna 840.

The base station device 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to FIG. 9.

The radio communication interface 855 supports any cellular communication scheme (such as LTE and LTE-advanced), and provides wireless communications to a terminal located in a sector corresponding to the RRH 860 via the RRH 860 and the antenna 840. The radio communication interface 855 may typically include, for example, a BB processor 856. The BB processor 856 is the same as the BB processor 826 described with reference to FIG. 9, except that the BB processor 856 is connected to an RF circuit 864 of the RRH 860 via the connection interface 857. As shown in FIG. 10, the radio communication interface 855 may include multiple BB processors 856. For example, the multiple BB processors 856 may be compatible with multiple frequency bands used by the eNB 830. Although FIG. 10 illustrates an example in which the radio communication interface 855 includes multiple BB processors 856, the radio communication interface 855 may include a single BB processor 856.

The connection interface 857 is an interface for connecting the base station device 850 (the radio communication interface 855) to the RRH 860. The connection interface 857 may be a communication module for communication in the above-described high-speed line that connects the base station device 850 (the radio communication interface 855) to the RRH 860.

The RRH 860 includes a connection interface 861 and a radio communication interface 863.

The connection interface 861 is an interface for connecting the RRH 860 (the radio communication interface 863) to the base station device 850. The connection interface 861 may be a communication module for communication in the above-mentioned high-speed line.

The radio communication interface 863 transmits and receives radio signals via the antenna 840. The radio communication interface 863 may typically include, for example, the RF circuit 864. The RF circuit 864 may include, for example, a mixer, a filter and an amplifier, and transmit and receive radio signals via the antenna 840. As shown in FIG. 10, the radio communication interface 863 may include multiple RF circuits 864. For example, the multiple RF circuits 864 may support multiple antenna elements. Although FIG. 10 illustrates an example in which the radio communication interface 863 includes multiple RF circuits 864, the radio communication interface 863 may include a single RF circuit 864.

In the eNB 830 as shown in FIG. 10, the acquisition unit 101, the transmission unit 103 and the transceiver of the electronic device 100 may be implemented through the radio communication interface 855 and/or the radio communication interface 863. At least a part of the functions may be implemented by the controller 851. For example, the controller 851 may execute the functions of the acquisition unit 101, the prediction unit 102, and the transmission unit 103 to acquire a prediction output including an optimum downlink transmitting beam and multiple optimum downlink receiving beams corresponding to the optimum downlink transmitting beam and provide the prediction output to UE, so that the measurement overhead and reporting overhead for beam management are effectively reduced.

### [Application Example of User Equipment]

### (First Application Example)

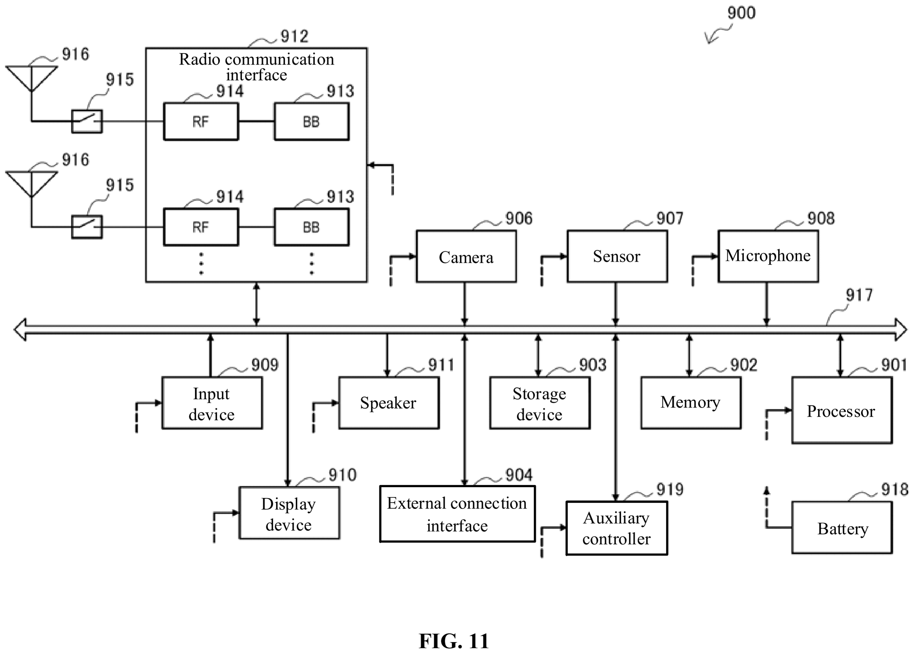

FIG. 11 is a block diagram illustrating an example of a schematic configuration of a smart phone 900 to which the technology of the present disclosure is applicable. The smart phone 900 includes a processor 901, a memory 902, a storage device 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC), and controls functions of the application layer and other layers of the smart phone 900. The memory 902 includes an RAM and an ROM, and stores data and programs executed by the processor 901. The storage device 903 may include a storage medium, such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyroscope sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen, such as a liquid crystal display (LCD) or an organic light emitting diode (OLED) display, and displays an output image of the smart phone 900. The speaker 911 converts the audio signal outputted from the smart phone 900 into sound.

The radio communication interface 912 supports any cellular communication scheme (such as LTE and LTE-Advanced), and performs wireless communications. The radio communication interface 912 may generally include, for example, a BB processor 913 and an RF circuit 914. The BB processor 913 may perform, for example, encoding/decoding, modulation/demodulation, and multiplexing/demultiplexing, and perform various types of signal processing for wireless communications. In addition, the RF circuit 914 may include, for example, a mixer, a filter and an amplifier, and transmit and receive a radio signal via the antenna 916. It should be noted that, although the figure shows a situation where one RF link is connected to one antenna, this is only illustrative, and a situation where one RF link is connected to multiple antennas through multiple phase shifters is also possible. The radio communication interface 912 may be a chip module on which the BB processor 913 and the RF circuit 914 are integrated. As shown in FIG. 11, the radio communication interface 912 may include multiple BB processors 913 and multiple RF circuits 914. Although FIG. 11 illustrates an example in which the radio communication interface 912 includes multiple BB processors 913 and multiple RF circuits 914, the radio communication interface 912 may include a single BB processor 913 or a single RF circuit 914.

In addition to the cellular communication scheme, the radio communication interface 912 may support another type of wireless communication scheme, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits (for example, circuits for different wireless communication schemes) included in the radio communication interface 912.

Each of the antennas 916 includes a single or multiple antenna elements (such as multiple antenna elements included in a MIMO antenna), and is configured for the radio communication interface 912 to transmit and receive radio signals. As shown in FIG. 11, the smart phone 900 may include multiple antennas 916. Although FIG. 11 illustrates an example in which the smart phone 900 includes multiple antennas 916, the smart phone 900 may include a single antenna 916.

In addition, the smart phone 900 may include antenna(s) 916 for each wireless communication scheme. In this case, the antenna switches 915 may be omitted from the configuration of the smart phone 900.

The processor 901, the memory 902, the storage device 903, the external connection interface 904, the camera 906, the sensor 907, the microphone 908, the input device 909, the display device 910, the speaker 911, the radio communication interface 912, and the auxiliary controller 919 are connected to each other via the bus 917. The battery 918 supplies power to each block of the smart phone 900 as shown in FIG. 11 via a feeder line. The feeder line is partially shown as a dashed line in the figure. The auxiliary controller 919 operates the least necessary function of the smart phone 900 in a sleep mode, for example.

In the smart phone 900 as shown in FIG. 11, the acquisition unit 101, the transmission unit 103 and the transceiver of the electronic device 100 may be implemented through the radio communication interface 912. At least part of the functions may be implemented by the processor 901 or the auxiliary controller 919. For example, the processor 901 or auxiliary controller 919 may execute the functions of the acquisition unit 101, the prediction unit 102, and the transmission unit 103 to acquire a prediction output including an optimum downlink transmitting beam and multiple optimum downlink receiving beams corresponding to the optimum downlink transmitting beam, so that the measurement overhead and reporting overhead for beam management are effectively reduced. In addition, the transmission unit 201, the reception unit 202 and the transceiver of the electronic device 200 may be implemented through the radio communication interface 912. At least part of the functions may be implemented by the processor 901 or the auxiliary controller 919. For example, the processor 901 or auxiliary controller 919 may execute the functions of the transmission unit 201, the reception unit 202, and the screening unit 203 to acquire a prediction output including an optimum downlink transmitting beam and multiple optimum downlink receiving beams corresponding to the optimum downlink transmitting beam, so that the measurement overhead and reporting overhead for beam management are effectively reduced.

### (Second Application Example)

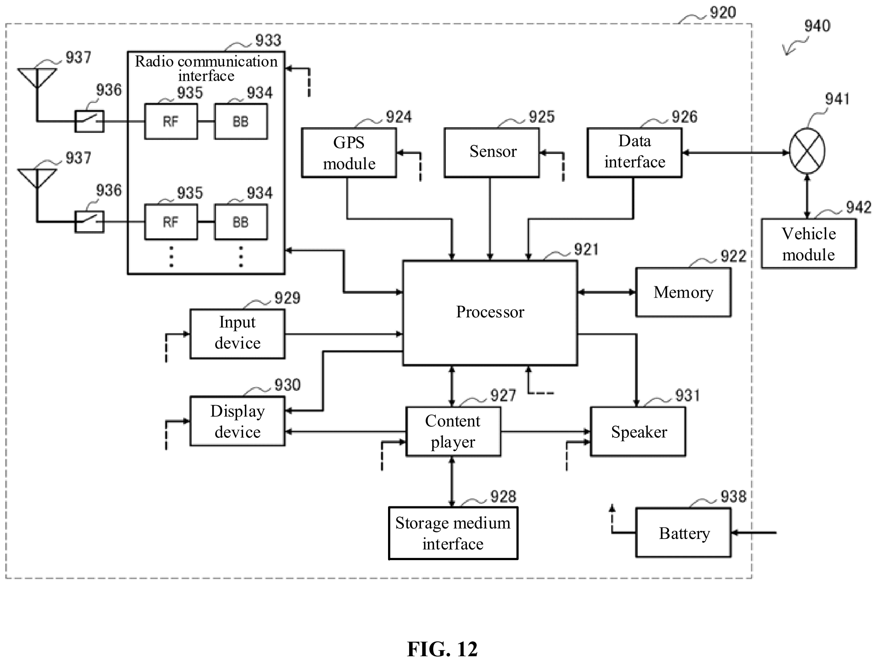

FIG. 12 is a block diagram illustrating an example of a schematic configuration of an automobile navigation device 920 to which the technology of the present disclosure is applicable. The automobile navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or SoC, and controls the navigation function and other functions of the automobile navigation device 920. The memory 922 includes an RAM and an ROM, and stores data and programs executed by the processor 921.

The GPS module 924 measures a position (such as latitude, longitude, and altitude) of the automobile navigation device 920 based on a GPS signal received from a GPS satellite. The sensor 925 may include a group of sensors, such as a gyroscope sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 represents content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image or represented content of a navigation function. The speaker 931 outputs a sound or represented content of the navigation function.

The radio communication interface 933 supports any cellular communication scheme (such as LTE and LTE-Advanced), and performs wireless communications. The radio communication interface 933 may generally include, for example, a BB processor 934 and an RF circuit 935. The BB processor 934 may perform, for example, encoding/decoding, modulation/demodulation, and multiplexing/demultiplexing, and perform various types of signal processing for wireless communications. In addition, the RF circuit 935 may include, for example, a mixer, a filter and an amplifier, and transmit and receive a radio signal via the antenna 937. The radio communication interface 933 may be a chip module on which the BB processor 934 and the RF circuit 935 are integrated. As shown in FIG. 12, the radio communication interface 933 may include multiple BB processors 934 and multiple RF circuits 935. Although FIG. 12 illustrates an example in which the radio communication interface 933 includes multiple BB processors 934 and multiple RF circuits 935, the radio communication interface 933 may include a single BB processor 934 or a single RF circuit 935.

In addition to the cellular communication scheme, the radio communication interface 933 may support another type of wireless communication scheme, such as a short-range wireless communication scheme, a near field communication scheme, or a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits (such as circuits for different wireless communication schemes) included in the radio communication interface 933.

Each of the antennas 937 includes a single or multiple antenna elements (such as multiple antenna elements included in a MIMO antenna), and is configured for the radio communication interface 933 to transmit and receive radio signals. As shown in FIG. 12, the automobile navigation device 920 may include multiple antennas 937. Although FIG. 12 shows an example in which the automobile navigation device 920 includes multiple antennas 937, the automobile navigation device 920 may include a single antenna 937.

In addition, the automobile navigation device 920 may include antenna(s) 937 for each wireless communication scheme. In this case, the antenna switches 936 may be omitted from the configuration of the automobile navigation device 920.

The battery 938 supplies power to blocks of the automobile navigation device 920 shown in FIG. 12 via a feeder line. The feeder line is partially shown as a dashed line in the figure. The battery 938 accumulates electric power supplied from the vehicle.

In the automobile navigation device 920 as shown in FIG. 12, the acquisition unit 101, the transmission unit 103 and the transceiver of the electronic device 100 may be implemented through the radio communication interface 933. At least part of the functions may be implemented by the processor 921. For example, the processor 921 may execute the functions of the acquisition unit 101, the prediction unit 102, and the transmission unit 103 to acquire a prediction output including an optimum downlink transmitting beam and multiple optimum downlink receiving beams corresponding to the optimum downlink transmitting beam, so that the measurement overhead and reporting overhead for beam management are effectively reduced. In addition, the transmission unit 201, the reception unit 202 and the transceiver of the electronic device 200 may be implemented through the radio communication interface 933. At least part of the functions may be implemented by the processor 921. For example, the processor 921 may execute the functions of the transmission unit 201, the reception unit 202, and the screening unit 203 to acquire a prediction output including an optimum downlink transmitting beam and multiple optimum downlink receiving beams corresponding to the optimum downlink transmitting beam, so that the measurement overhead and reporting overhead for beam management are effectively reduced.

The technology of the present disclosure may be implemented as an in-vehicle system (or vehicle) 940 including the automobile navigation device 920, an in-vehicle network 941, and one or more blocks of vehicle modules 942. The vehicle modules 942 generate vehicle data (such as vehicle speed, engine speed, and failure information), and outputs the generated data to the in-vehicle network 941.

Basic principles of the present disclosure are described above in conjunction with specific embodiments. However, it should be noted that those skilled in the art can understand that all or any steps or components of the methods and devices of the present disclosure may be implemented in any computing device (including processors, storage media, and the like) or a network of computing devices, in a form of hardware, firmware, software or a combination thereof. Such implementation can be realized by those skilled in the art after reading the description of the present disclosure, by utilizing basic knowledge of circuit design or basic programming skills.

Moreover, a program product storing machine-readable instruction codes is further provided according to an embodiment of the present disclosure. The instruction codes, when read and executed by a machine, may implement the methods according to the embodiments of the present disclosure.

Accordingly, a storage medium for carrying the program product storing the machine-readable instruction codes is further included in the present disclosure. The storage medium includes, but is not limited to, a floppy disk, an optical disk, a magneto-optical disk, a storage card, a memory stick, and the like.

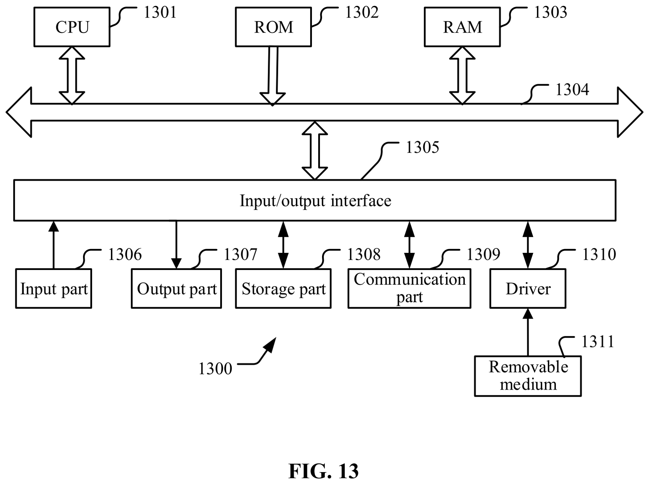

In a case of implementing the embodiments of the present disclosure in software or firmware, the program consisting of the software is mounted to a computer with a dedicated hardware structure (such as a general-purpose personal computer 1300 as shown in FIG. 13) from the storage medium or network. The computer, when mounted with various programs, performs various functions.

In FIG. 13, a central processing unit (CPU) 1301 executes various processes according to a program stored in a read-only memory (ROM) 1302 or a program loaded from a storage part 1308 to a random-access memory (RAM) 1303. In the RAM 1303, data required for the CPU 1301 to perform various processes or the like is stored as necessary. The CPU 1301, the ROM 1302 and the RAM 1303 are connected to each other via a bus 1304. An input/output interface 1305 is connected to the bus 1304.

The following components are connected to the input/output interface 1305: an input part 1306 (including a keyboard, a mouse, and the like), an output part 1307 (including a display, such as a cathode ray tube (CRT) and a liquid crystal display (LCD), a loudspeaker, and the like), a storage part 1308 (including a hard disk and the like), and a communication part 1309 (including a network interface card, such as a LAN card, and a modem). The communication part 1309 performs communication processing via a network, such as the Internet. A driver 1310 may be connected to the input/output interface 1305 as needed. A removable medium 1311, such as a magnetic disk, an optical disk, a magnetic optical disk, and a semiconductor memory, is mounted to the driver 1310 as required, so that a computer program read therefrom is mounted to the storage part 1308 as required.

In a case that the above processes are implemented by software, the program consisting the software is mounted from a network, such as the Internet, or from a storage medium, such as the removable medium 1311.

Those skilled in the art should understood that the storage medium is not limited to the removable medium 1311, as shown in FIG. 13, which stores a program and is distributed separately from the device so as to provide the program to a user. Examples of the removable medium 1311 includes a magnetic disk (including a floppy disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 1302, the hard disk contained in the storage part 1308, or the like. The storage medium stores a program and is distributed to the user along with an apparatus in which the storage medium is incorporated.

It should be further noted that components or steps in the device, method and system of the present disclosure can be decomposed and/or recombined. Such decomposition and/or recombination should be considered equivalents of the present disclosure. Furthermore, steps for executing the above processes may naturally be executed in a chronological order as described, but do not necessarily need to be executed in the chronological order. Certain steps may be performed in parallel with or independently of each other.

Finally, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other identical elements in the process, method, article or device.

Although the embodiments of the present disclosure are described in detail above with reference to the accompanying drawings, it should be understood that the embodiments are only for illustrating the present disclosure and do not constitute a limitation of the present disclosure. For those skilled in the art, various modifications and changes can be made to the embodiments without departing from the essence and scope of the present disclosure. Therefore, the scope of the present disclosure is limited by only the appended claims and equivalents thereof.

## Claims

1. An electronic device for beam management in wireless communications, comprising:
processing circuitry, configured to:
acquire a measurement result of user equipment with respect to a downlink beam pair to be measured, the downlink beam pair to be measured comprising a downlink transmitting beam and a downlink receiving beam; and
perform, based on the measurement result, beam pair prediction with an artificial intelligence (AI) model to acquire a prediction output, wherein, the prediction output comprises an optimum downlink transmitting beam, multiple optimum downlink receiving beams corresponding to the optimum downlink transmitting beam and residence time for each optimum downlink receiving beam.

2. The electronic device according to claim 1, wherein each downlink beam pair to be measured comprises one downlink transmitting beam and multiple downlink receiving beams corresponding to the one downlink transmitting beam.

3. The electronic device according to claim 1, wherein the processing circuitry is further configured to acquire one of more of the following information: information related to indication of the downlink beam pair corresponding to the measurement result, and information related to movement of the user equipment.

4. The electronic device according to claim 3, wherein the information related to the movement of the user equipment comprises one or more of the following: a trajectory of the user equipment, a speed of the user equipment, an activity range of the user equipment, a location of the user equipment and a movement direction of the user equipment.

5. The electronic device according to claim 1, wherein the acquired measurement result is obtained through screening, by the user equipment, data obtained with measuring, wherein authentication information of the AI model comprises information related to the screening.

6. The electronic device according to claim 5, wherein the information related to the screening comprises reference information for classifying the data according to quality of the data obtained with measuring.

7. The electronic device according to claim 6, wherein the quality of the data is represented by a measured physical layer reference signal received power and/or a signal to interference and noise ratio of a signal, and the reference information comprises one or more physical layer reference signal received power thresholds and/or signal to interference and noise ratio thresholds.

8. The electronic device according to claim 6, wherein the user equipment classifies the data into data of different quality levels according to the reference information, and the user equipment applies finer quantization accuracy and smaller step size for data in a higher quality level than for data in a lower quality level.

9. The electronic device according to claim 8, wherein the user equipment discards data in the lowest one or more quality levels.

10. The electronic device according to claim 1, wherein the prediction output further comprises residence time for the optimum downlink transmitting beam.

11. The electronic device according to claim 1, wherein residence time for a beam is represented by a time period or a timestamp when the beam is transmitted.

12. The electronic device according to claim 1, wherein the optimum downlink transmitting beam and the multiple optimum downlink receiving beams form an optimum beam pair successively according to the residence time,
wherein the user equipment uses the multiple optimum downlink receiving beams successively according to the residence time to receive the optimum downlink transmitting beam.

13. The electronic device according to claim 3, wherein the electronic device is located on a network side, the processing circuitry is configured to receive the measurement result and the information from the user equipment, and the processing circuitry is further configured to transmit the prediction output to the user equipment.

14. The electronic device according to claim 13, wherein the processing circuitry is configured to share authentication information of the artificial intelligence model with the user equipment, the authentication information comprising information related to screening, by the user equipment, data obtained with measuring to obtain the measurement result.

15. The electronic device according to claim 1, wherein the electronic device is located on the user equipment side, and the processing circuitry is configured to transmit the prediction output to a network side when the network side performs model monitoring on the artificial intelligence model, and transmit information of the optimum downlink transmitting beam to the network side during an inference phase of the artificial intelligence model.

16. The electronic device according to claim 15, wherein the processing circuitry is configured to share authentication information of the artificial intelligence model with the network side, the authentication information comprising information related to screening, by the user equipment, data obtained with measuring to obtain the measurement result.

17. An electronic device for user equipment side of wireless communications, comprising:
processing circuitry, configured to:
transmit, to a network side, a measurement result with respect to a downlink beam pair to be measured, the downlink beam pair to be measured comprising a downlink transmitting beam and a downlink receiving beam, wherein the network side performs, based on the measurement result, beam pair prediction with an artificial intelligence (AI) model to acquire a prediction output, wherein, the prediction output comprises an optimum downlink transmitting beam, multiple optimum downlink receiving beams corresponding to the optimum downlink transmitting beam and residence time for each optimum downlink receiving beam; and
receive the prediction output from the network side.

18. The electronic device according to claim 17, wherein the optimum downlink transmitting beam and the multiple optimum downlink receiving beams form an optimum beam pair successively according to the residence time,
wherein the processing circuitry is further configured to use the multiple optimum downlink receiving beams successively according to the residence time to receive the optimum downlink transmitting beam.

19. The electronic device according to claim 17, wherein the processing circuitry is further configured to obtain the measurement result by screening data obtained with measuring,
wherein the processing circuitry is configured to perform the screening by classifying the data obtained with measuring according to quality of the data.

20. The electronic device according to claim 19, wherein authentication information of the artificial intelligence model comprises reference information for the classifying.

21. The electronic device according to claim 20, wherein the quality of the data is represented by a measured physical layer reference signal received power and/or signal to interference and noise ratio of a signal, and the reference information comprises one or more physical layer reference signal received power thresholds and/or signal to interference and noise ratio thresholds.

22. The electronic device according to claim 21, wherein the processing circuitry classifies the data into data of different quality levels according to the reference information, and the processing circuitry applies finer quantization accuracy and smaller step size for data in a higher quality level than for data in a lower quality level.

23. The electronic device according to claim 22, wherein the processing circuitry is further configured to discard data in the lowest one or more quality levels.

24. The electronic device according to claim 19, wherein the processing circuitry is configured to perform the screening according to capability of the user equipment.

25. The electronic device according to claim 17, wherein each downlink beam pair to be measured comprises a downlink transmitting beam and multiple downlink receiving beams corresponding to the downlink transmitting beam.

26. The electronic device according to claim 17, wherein the processing circuitry is further configured to transmit, to the network side, one of more of the following information: information related to indication of the downlink beam pair corresponding to the measurement result, and information related to movement of the user equipment.

27. A method for beam management in wireless communications, comprising:
acquiring a measurement result of user equipment with respect to a downlink beam pair to be measured, the downlink beam pair to be measured comprising a downlink transmitting beam and a downlink receiving beam; and
performing, based on the measurement result, beam pair prediction with an artificial intelligence (AI) model to acquire a prediction output, wherein, the prediction output comprises an optimum downlink transmitting beam, multiple optimum downlink receiving beams corresponding to the optimum downlink transmitting beam and residence time for each optimum downlink receiving beam.

28. A method for user equipment side of wireless communications, comprising:
transmitting, to a network side, a measurement result with respect to a downlink beam pair to be measured, the downlink beam pair to be measured comprising a downlink transmitting beam and a downlink receiving beam, wherein the network side performs, based on the measurement result, beam pair prediction with an artificial intelligence (AI) model to acquire a prediction output, wherein, the prediction output comprises an optimum downlink transmitting beam, multiple optimum downlink receiving beams corresponding to the optimum downlink transmitting beam and residence time for each optimum downlink receiving beam; and
receiving the prediction output from the network side.

29. A computer-readable storage medium having computer-executable instructions stored thereon, which when executed by a processor, cause the processor to perform the method according to claim 27 or 28.
